Europäisches Patentamt

European Patent Office

Office européen des brevets

(11) Veröffentlichungsnummer: **0 470 680 A2**

# EUROPÄISCHE PATENTANMELDUNG

(21) Anmeldenummer: **91250218.4**

(22) Anmeldetag: **05.08.91**

(51) Int. Cl.5: **F16L 13/14**

(30) Priorität: **07.08.90 DE 4025317**

(43) Veröffentlichungstag der Anmeldung:
**12.02.92 Patentblatt 92/07**

(84) Benannte Vertragsstaaten:
**AT BE CH DE ES FR GB GR IT LI LU NL SE**

(71) Anmelder: **MANNESMANN Aktiengesellschaft**
**Mannesmannufer 2**
**W-4000 Düsseldorf 1(DE)**

(72) Erfinder: **Unewisse, Heinz**
**August-Schmidt-Strasse 40**
**W-4330 Mühlheim/Ruhr(DE)**

(74) Vertreter: **Presting, Hans-Joachim, Dipl.-Ing.**
**et al**
**Meissner & Meissner Patentanwaltsbüro**
**Herbertstrasse 22**
**W-1000 Berlin 33(DE)**

(54) **Verwendung eines Pressfittings zur Herstellung einer unlösbaren Verbindung von dünnwandigen Rohren.**

(57) Die Erfindung betrifft die Verwendung eines Preßfittings mit sickenförmigen, einen Dichtring aufnehmenden Enden, zur Herstellung einer unlösbaren Verbindung von dünnwandigen Rohren, die mittels eines Preßwerkzeuges im kalten Zustand form- und kraftschlüssig mit dem Preßfitting verbunden werden, mit der Maßgabe, daß insbesondere zum Transport von Seewasser und Brauchwässer aller Art in der Installationstechnik und im Apparatebau die nahtlosen oder geschweißten Rohre und der Preßfitting aus einer Kupfer-Nickel-Knetlegierung bestehen, wobei die Rohre einen Außendurchmesser im Bereich von 10 bis 100 mm und eine Wanddicke im Bereich von 0,5 bis 3,0 mm aufweisen und mindestens der den Dichtring enthaltende Bereich des Preßfittings mit dem Rohr verpreßt wird.

EP 0 470 680 A2

Beim Transport von aggressiven Wässern, insbesondere Seewasser und Brauchwässer aller Art werden durch die Wasserinhaltsstoffe wie z. B. Chloride hinsichtlich der Korrosionsbeständigkeit hohe Anforderungen an die wasserführenden Leitungen gestellt. Zur Überwindung dieses Problems werden oftmals nichtrostende Stähle eingesetzt (EP 0 198 789 A2), die aber trotz hoher Legierungsgehalte Anwendungsgrenzen haben. Überschreiten die Chloridgehalte der Wässer bestimmte Werte, dann versagen auch hochlegierte nichtrostende Stähle.

Eine Problemlösung für den Transport oben genannter Wässer ist der Einsatz einer Kupfer-Nickel-Knetlegierung, die im hohen Maße korrosionsbeständig ist. Zur Lösung der Korrosionsprobleme im Bereich z. B. der Meerwasser-oder Brauchwassertechnik ist es zwar bekannt (DE-OS 21 58 647) verschiedene Kupfer-Nickel-Knetlegierungen zu verwenden, die notwendige Verbindungstechnik mittels Schutzgasschweißen stellt aber eine hochspezialisierte und sehr aufwendige Technik dar und erfordert dementsprechend ausgebildetes Fachpersonal. Trotzdem kommt es immer wieder zu Porenbildungen, die nach kurzer Zeit zu Leckagen im Rohrsystem führen.

Aufgabe der Erfindung ist es, eine Verbindungstechnik anzugeben, mit der in einfacher, sicherer und kostengünstiger Weise dünnwandige Rohre aus einer Kupfer-Nickel-Knetlegierung miteinander verbunden werden können.

Diese Aufgabe wird durch die Verwendung eines an sich bekannten Preßfittings gemäß dem Hauptanspruch gelöst.

Der Vorteil dieser Verbindungstechnik liegt darin, daß damit die Anwendung der Kupfer-Nickel-Knetlegierung für weite Bereiche der Installationstechnik und des Apparatebaues mit besonderer Anforderung an die Korrosionsbeständigkeit unter wirtschaftlichen Gesichtspunkten möglich wird. Außerdem wird die Verwendung dieses Werkstoffes mittels der vorgeschlagenen Verbindungstechnik von Fachinstallationsbetrieben bzw. Kleinfirmen ohne speziell ausgebildetes Schweißfachpersonal beherrschbar. Ein weiterer Vorteil dieser Verbindungstechnik liegt darin, daß durch die kalte Verpressung im Gegensatz zum Schweißen keine Brandgefährdung auftritt und eine Nachkontrolle der Verbindung entfallen kann, da durch das automatisch arbeitende Preßwerkzeug in jedem Fall eine dichte Verbindung gewährleistet ist.

Damit auch höhere in Axialrichtung wirkende Kräfte sicher aufgenommen werden können, wird weiterbildend vorgeschlagen, zusätzlich zu der in den einen Dichtring enthaltenden Fittingsbereich auch an anderen Stellen eine Verpressung vorzunehmen, um damit die mechanische Verklammerung zu verbessern.

In der Zeichnung wird das Prinzip der Verwendung eines Preßfittings näher erläutert.

Es zeigen:

Figur 1    einen Teillängsschnitt durch eine Preßfittingverbindung mit noch angesetztem Preßwerkzeug

Figur 2    einen Schnitt entlang der Linie A-A in Figur 1

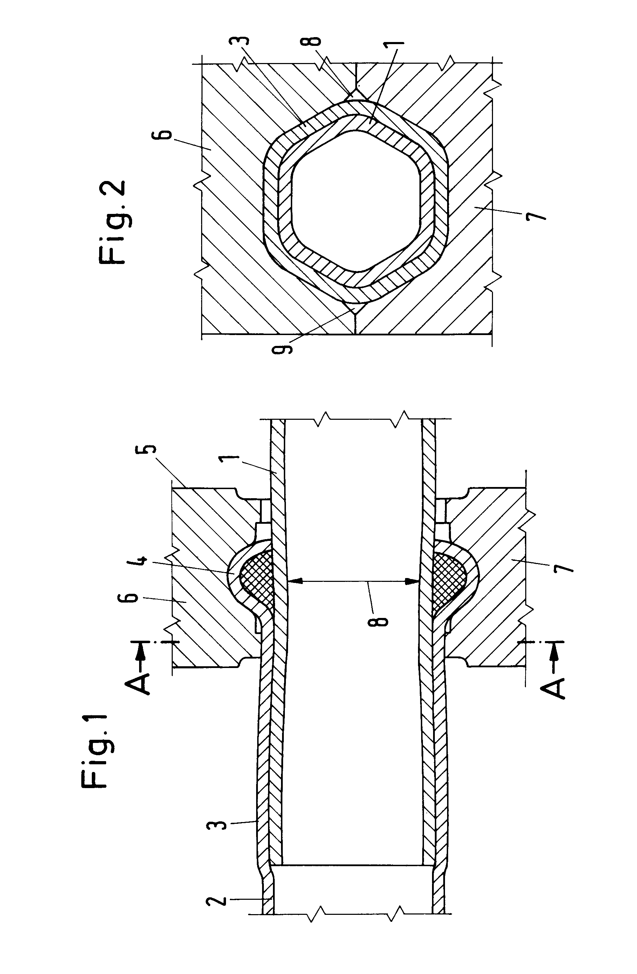

In Figur 1 ist ein Teillängsschnitt durch eine Preßfittingverbindung mit noch angesetztem Preßwerkzeug dargestellt. Das aus einer Kupfer-Nickel-Knetlegierung, z. B. CuNil0FeIMn hergestellte Rohr 1 wird mit seinem Ende bis zum Anschlag 2 des Preßfittings 3 hineingeschoben. Der Preßfitting 3 weist je ein sickenförmiges Ende 4 auf, in dessen Hohlraum der Runddichtring 5 aus Butylkautschuk angeordnet ist. Die beiden Backen 6,7 des hier nicht dargestellten Preßwerkzeuges umfassen das sickenförmige Ende 4 des Preßfittings 3 und durch hydraulisch oder elektromechanisch aufgebrachten Druck werden die beiden Backen 6,7 geschlossen und der Preßfitting 3 mit dem Rohr 1 form- und kraftschlüssig miteinander verbunden. Die Verringerung des Innendurchmessers 8 des Rohres 1 im Bereich der Verpressung wird bewußt angestrebt, um die mechanische Verklammerung zu verbessern. Dadurch steigt der Widerstand gegen die auftretenden Längskräfte, die versuchen, das Rohr 1 aus dem Preßfitting 3 herauszudrücken.

Bei der Verpressung wird der Durchmesser des sickenförmigen Endes 4 des Preßfittings 3 verringert und der Hohlraum in der Sicke verkleinert, so daß der eingeschlossene Runddichtring 5 elastisch verformt und damit die Dichtwirkung erzielt wird.

Figur 2 zeigt einen Schnitt entlang der Linie A-A in Figur 1. In diesem Querschnitt ist die form- und kraftschlüssige Verklammerung des Preßfittings 3 mit dem Rohr 1 gut zu erkennen. Die beiden Backen 6,7 des nicht dargestellten Preßwerkzeuges sind voll zugefahren und bedingt durch die Form der Backen 6,7 entsteht in etwa eine sechseckige Querschnittskonfiguration der Verbindung. Der kleine Hohlraum 8,9 in der Teilungsebene der beiden Backen 6,7 ist erforderlich, damit überschüssiges Material bei der Verpressung abfließen kann.

**Patentansprüche**

1.  Verwendung eines Preßfittings mit sickenförmigen, einen Dichtring aufnehmenden Enden, zur Herstellung einer unlösbaren Verbindung von dünnwandigen Rohren, die mittels eines Preßwerkzeuges im kalten Zustand form- und kraftschlüssig mit dem Preßfitting verbunden werden, mit der Maßgabe, daß insbesondere zum Transport von Seewasser und Brauchwässer aller Art in der Installationstechnik und im Apparatebau die nahtlosen oder geschweißten Rohre und der Preßfitting aus einer Kupfer-Nickel-Knetlegierung bestehen, wobei die Rohre einen Außendurchmesser im Bereich von 10 bis 100 mm und eine Wanddicke im Bereich von 0,5 bis 3,0 mm aufweisen und mindestens der den Dichtring enthaltende Bereich des Preßfittings mit dem Rohr verpreßt wird.

2. Verbindung nach Anspruch 1,
   **dadurch gekennzeichnet**,
   daß zusätzlich auch andere Bereiche des Preßfittings mit dem Rohr verpreßt werden.

Fig.1

Fig.2

EP 0 470 680 A2